Europäisches Patentamt

European Patent Office

Office européen des brevets

(19)

(11) Veröffentlichungsnummer : **0 010 251 B1**

(12) # EUROPÄISCHE PATENTSCHRIFT

(45) Veröffentlichungstag der Patentschrift :
30.03.83

(51) Int. Cl.³ : **H 02 B   1/04**

(21) Anmeldenummer : **79103865.6**

(22) Anmeldetag : **09.10.79**

(54) Vorrichtung zur Befestigung von Einbau-Installationsgeräten.

(30) Priorität : **25.10.78 DE 2846443**

(43) Veröffentlichungstag der Anmeldung :
**30.04.80 Patentblatt 80/09**

(45) Bekanntmachung des Hinweises auf die Patenterteilung : **30.03.83 Patentblatt 83/13**

(84) Benannte Vertragsstaaten :
**AT BE CH FR GB IT NL SE**

(56) Entgegenhaltungen :
**FR A 2 348 591**
**GB A 2 007 434**

(73) Patentinhaber : **BROWN, BOVERI & CIE Aktiengesellschaft Mannheim**
**Kallstadter Strasse 1**
**D-6800 Mannheim Käfertal (DE)**

(72) Erfinder : **Stritt, Helmut**
**Holzbauerstrasse 12**
**D-6830 Schwetzingen (DE)**
Erfinder : **Schmidt, Alfred**
**Unterer Erbsenbach 1**
**D-6124 Beerfelden-Gammelsbach (DE)**
Erfinder : **Leible, Erwin**
**Breslauerstrasse 15**
**D-6930 Eberbach (DE)**

(74) Vertreter : **Kempe, Wolfgang Dr. et ai**
**c/o Brown, Boveri & Cie AG Patentabteilung Postfach**
**351**
**D-6800 Mannheim 1 (DE)**

Jouve, 18, rue St-Denis, 75001 Paris, France

## Vorrichtung zur Befestigung von Einbau-Installationsgeräten

Die Erfindung betrifft eine Vorrichtung zur Befestigung von Einbau-Installationsgeräten, insbesondere zur gemeinsamen Befestigung von Leitungsschutzschaltern und Sammelschienen, welche Installationsgeräte eine Schnellbefestigungseinrichtung mit einer am Boden des Installationsgerätes angeordneten festen und einer bewegbaren Nase zum Aufschnappen auf eine Tragschiene aufweisen, wobei die feste bzw. die bewegbare Nase im aufgeschnappten Zustand hinter freie Schenkel der Tragschiene greifen, mit einer Tragplatte, an der die Sammelschienen gehaltert sind und die mit einer ersten L-förmigen Ausformung versehen ist, wobei die Einbau-Installationsgeräte so auf der Tragplatte befestigt sind, daß der freie Schenkel der ersten Ausformung hinter die bewegliche Nase greift und auf der anderen Seite das Einbau-Installationsgerät an der Sammelschiene gehaltert ist.

Eine derartige Vorrichtung dient zur Befestigung insbesondere von Leitungsschutzschaltern und zum Anschluß der Leitungsschutzschalter dienenden Sammelschienen und ist als sogenanntes integriertes Sammelschienensystem für Leitungsschutzschalter, das zum Einbau in Installationsverteiler, Schaltkästen, Schaltanlagen usw. vorgesehen ist, ausgebildet.

Es ist eine Vorrichtung der eingangs genannten Art bekanntgeworden, (FR-A-2 348 591) welche eine Tragplatte besitzt, die hinter die am Leitungsschutzschalter angeordnete ortsfeste Nase der Schnellbefestigungsvorrichtung (Aufschnappvorrichtung) greift und so zur Befestigung des Leitungsschutzschalters auf einer Seite dient. Die Befestigung an der anderen Seite des Leitungsschutzschalters erfolgt an der Sammelschiene, die auf Sammelschienenstützern am Boden der Tragplatte gehalten sind. Geräte mit einer abweichenden Schnellbefestigungseinrichtung oder größerer Ausladung oder solche, die nicht an Sammelschienen angeschlossen werden, können nicht auf die gleiche Vorrichtung neben den Leitungsschutzschaltern angeordnet werden.

Es ist daher Aufgabe der Erfindung, eine Vorrichtung der eingangs genannten Art zu schaffen, bei der bei Bedarf neben den Leitungsschutzschaltern in der gleichen Reihe auch andere Geräte wie z. B. Fehlerstromschutzschalter angebracht werden können, deren Schnellbefestigung auf die Maße der genormten Hutprofilschiene abgestimmt ist.

In einem ersten Vorschlag wird diese Aufgabe erfindungsgemäß dadurch gelöst, daß auf der Tragplatte (10, 50, 100) eine Tragleiste (12, 52) angebracht ist, die so ausgebildet ist, daß sie mit der ersten Ausformung zusammen eine Hutprofiltragschiene zum Aufschnappen von weiteren Installationsgeräten bildet.

Wenn man die Tragplatte und die Tragleiste aus einem Metall- oder Kunststoffstrangpressprofil herstellt, die ja auch als Hohlprofile ausgeführt sein können, kann die Tragplatte und die Tragleiste so ausgebildet werden, daß die Tragleiste an jeder beliebigen Stelle und in der jeweils erforderlichen Länge in die Tragplatte eingeschoben, eingedrückt, eingeschlagen oder auf andere Weise an der gewünschten Stelle an der Tragplatte befestigt werden kann, wodurch der L-förmige Schenkel an der Tragplatte mit der Tragleiste zu einer einer Hutprofilschiene entsprechenden Befestigungseinrichtung ergänzt wird. Damit die Tragleiste überall angebracht werden kann, wo es gewünscht ist, besitzt die Tragplatte längs der zur einseitigen Schnappbefestigung unerlässlichen bei Geräten mit größerer Sockelausladung jedoch hinderlichen Ausformung bzw. Nase am Rande eine Sollbruchkerbe, entlang der der störende Teil der Nase nach vorherigem Einsägen leicht abgebrochen werden kann.

In einem anderen Vorschlag wird die Aufgabe erfindungsgemäß dadurch gelöst, daß auf der Tragplatte als Tragschiene eine Hutprofiltragschiene befestigt ist, deren einer, zu der Sammelschiene hinweisender Schenkel teilweise entfernt ist.

Weitere vorteilhafte Ausgestaltungen sind den weiteren Unteransprüchen zu entnehmen.

Anhand der Zeichnung, in der drei Ausführungsbeispiele der Erfindung näher erläutert sind, soll die Erfindung sowie weitere vorteilhafte Ausgestaltungen und Vorteile näher erläutert und beschrieben werden.

Es zeigt

Figuren 1a, b, c eine Vorrichtung gemäß der Erfindung mit einer Tragplatte, in die eine Tragleiste einschiebbar ist, in getrennter und zusammengebauter Darstellung,

Figuren 2a bis 2c eine erfindungsgemäße Vorrichtung, bei der die Tragleiste auf die Tragplatte aufgeschnappt wird, in ähnlicher Darstellung wie in Fig. 1,

Figur 3 eine Vorrichtung gemäß der Erfindung bei der auf die Tragplatte eine Hutprofilschiene aufgenietet ist und

Figuren 4 und 5 zwei Befestigungsarten von Installationsgeräten gemäß der Erfindung.

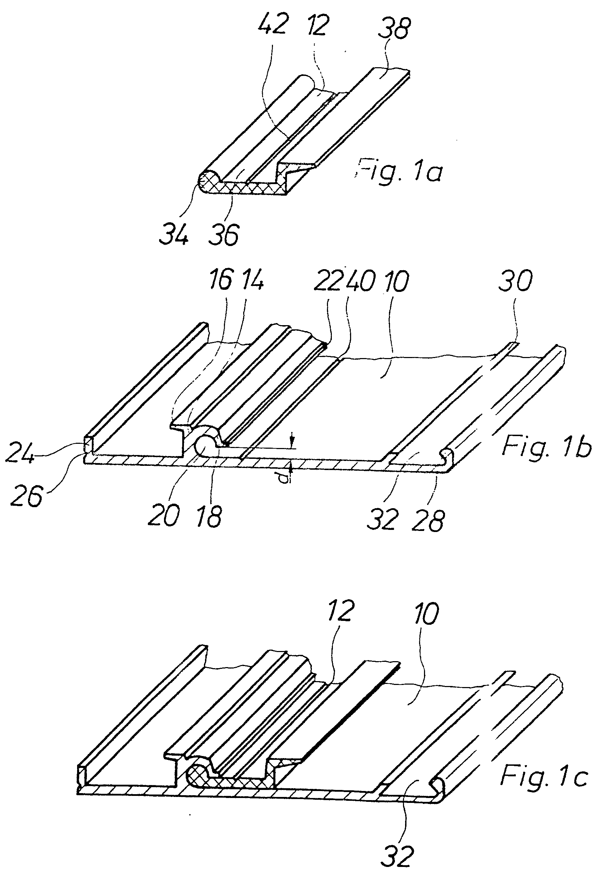

In der Fig. 1 ist ein Vorrichtung dargestellt, die aus einer Tragplatte 10 und einer Tragleiste 12 zusammengesetzt ist (vergl. Fig. 1c). An der Tragplatte 10 ist eine L-förmig ausgebildete erste Ausformung 14 angebracht, auf deren dem freien Schenkel 16 gegenüberliegenden Seite ein Fortsatz 18 angeformt ist, der eine kreisförmige Öffnung 20 bildet, wobei der Fortsatz 18 in einem Abstand d zum Boden der Tragplatte hin endet, so daß die Öffnung 20 auf der Seite offen ist, die dem freien Schenkel 16 entgegengesetzt liegt. Das Ende des Fortsatzes 18 verläuft parallel zum Boden der Tragplatte 10. Damit diese Endfläche etwas vergrößert wird, ist ein Fortsatzleiste 22 angeformt. An der Kante der Tragplatte 10, die auf der Seite liegt, in die das freie Ende des Schenkels 16 weist, ist ein Rand 24 angeformt, der senkrecht zur Bodenfläche der Tragplatte 10 verläuft und der im Bereich der oberen Bodenfläche der Tragplatte 10 mit einer Sollbruchkerbe 26 versehen ist. An der gegenüberliegenden Seite ist ein weiterer Rand 28 angeformt, der hin zur ersten Ausformung 14 leicht geneigt ist und mit einer zum weiteren Rand 28 hin geneigten Leiste 30 ein trapezförmige Ausnehmung 32 bildet.

Die Tragleiste 12 besitzt an einer Längskante eine kreisförmige Verdickung 34, deren Querschnitt der Öffnung 20 entspricht ; die Dicke des mittleren Bereiches 36 der Tragleiste entspricht dem Abstand d, so daß Tragleiste 12, wie aus der Fig. 1c ersichtlich, mit der Verdickung 34 in die Öffnung 20 eingeschoben werden kann. An der anderen Längskante besitzt die Tragleiste 12 eine L-förmige Anformung 38, die sich mit der ersten Ausformung 14 zu einer hutprofilschienenartigen Trageinrichtung ergänzt.

Man erkennt in der Fig. 1b eine Kerbe 40 an der Tragschiene 10 und an der Tragleiste eine weitere Kerbe 42 ; im montierten Zustand liegen beide Kerben, die parallel zur ersten Ausformung 14 bzw. zur Tragleiste im eingebauten Zustand derselben verlaufen, übereinander.

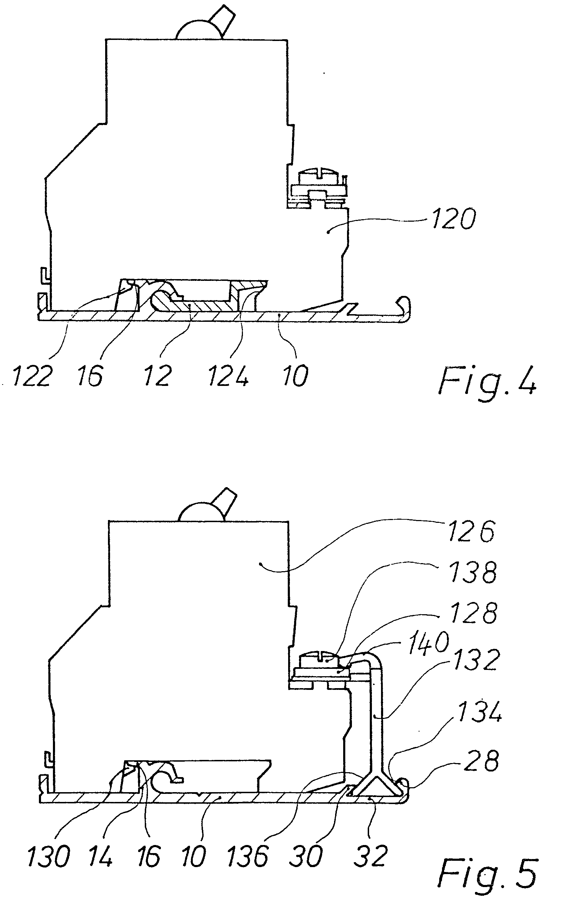

In Fig. 1c erkennt man den Zusammenbau von Tragplatte 10 und Tragleiste 12 ; die hutprofil-schienenartige Trageinrichtung dient zum Auf-schnappen eines Leitungsschutzschalters, wobei der freie Schenkel 16 hinter dessen am Boden des Leitungsschutzschalters angeordnete bewegliche Nase (nicht gezeigt) und deren anderer freier Schenkel der L-förmigen Anformung an der Tragleiste 12 hinter die feste Nase am Schaltgerät bzw. am Leitungsschutzschalter greift. Sofern das zu befestigende Schaltgerät über den Rand 24 hinausragt, muß der Rand entfernt werden ; dies erfolgt einfach dadurch, daß der Rand 24 eingesägt und der Bereich, in dem er stört entlang der Sollbruchkerbe 26 abgebrochen wird. Die trapezförmige Öffnung 32 dient zur Befestigung von Sammelschienenstützern, die nicht weiter dargestellte Sammelschienen haltern. Wenn die Tragleiste 12 nicht eingebaut ist, d. h. wenn die Tragplatte so verwendet wird, wie in der Fig. 1b dargestellt, dann wird das Schaltgerät mit seiner bewegbaren Nase hinter den Schenkel 16 verhakt und durch Anschrauben der gegen-überliegenden Anschlußklemme an der Sammel-schiene befestigt. Man kann, wie man erkennt, die Anordnung so treffen, daß sowohl eine Aufschnappbefestigung an der Tragplatte mit Tragleiste als auch an der Tragplatte und der Sammelschiene möglich ist. (vergl. auch Fig. 4 und 5).

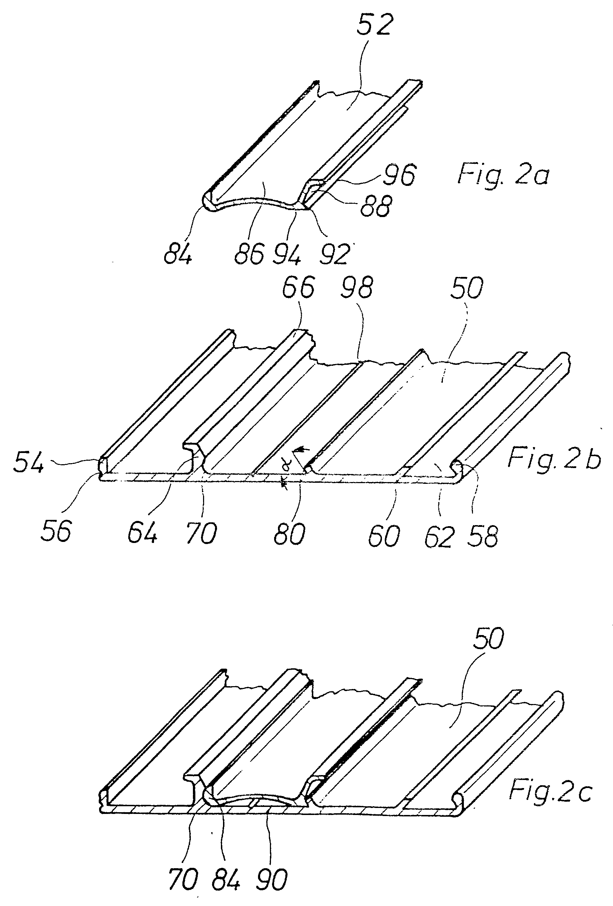

Die Fig. 2 zeigt eine andere Ausgestaltung der Erfindung. Die Tragplatte besitzt die Bezugsziffer 50 und die Tragleiste die Bezugsziffer 52. An der Tragplatte 50 ist an einer Kante ein dem Rand 24 entsprechender Rand 54 mit einer Sollbruchkerbe 56 angeformt und an der gegenüberliegenden Kante erkennt man einen weiteren Rand 58 und eine Leiste 60, die miteinander eine trapezförmige Öffnung 62 bilden (in gleicher Weise wie der weitere Rand 28 mit der Leiste 30).

An der Tragplatte 50 ist in ähnlicher Weise eine erste Ausformung 64 angeformt, die L-förmig ausgebildet ist und einen freien Schnekel 66 besitzt. Auf der dem freien Schenkel gegenüberliegenden Seite ist eine halbkreisförmige Ausnehmung 70 angeformt, die den Boden bzw. die nach oben weisende Fläche der Tragplatte 50 tangiert.

An der nach oben weisender Fläche ist eine weitere Leiste 80 angeformt, die hin zur ersten Ausformung 64 geneigt ist und deren zur Ausformung 64 hinweisende Fläche mit der Bodenfläche der Tragplatte 50 einen spitzen Winkel $\alpha$ bildet.

Die Tragleiste 52 besitzt an ihrer einen Längskante eine der halbkreisförmigen Öffnung 70 entsprechende Verdickung 84 und an der gegenüberliegenden Kante eine annähernd L-förmige Anformung 88 ; der mittlere Bereich zwischen der Verdickung 84 und der Anformung 88, der mit der Bezugsziffer 86 bezeichnet ist, ist gebogen, so daß, wie aus der Fig. 2c ersichtlich, ein kreissegmentförmiger Zwischenraum 90 zwischen der Bodenfläche der Tragplatte 50 und der Tragleiste 52 gebildet wird. An der der Verdickung 84 entgegengesetzt liegenden Kante ist ein Fortsatz 92 angeformt, der auf der der Anformung 88 entgegengesetzten Seite, also nach unten hin eine gerade Fläche 94 und eine außerhalb der Anformung 88 liegende Schrägfläche 96 aufweist. Der Winkel zwischen der geraden Fläche und der Schrägfläche entspricht dem Winkel $\alpha$.

Im zusammengebauten Zustand, der in der Fig. 2c ersichtlich ist, liegt die Verdickung 84 in der halbkreisförmigen Ausnehmung 70 und der Fortsatz 92 stützt sich gegen die Leiste 80 ab. Die Befestigung erfolgt dabei so, daß der Fortsatz zuerst in die winklige Öffnung zwischen der Leiste 80 und dem Boden der Tragplatte 50 eingesetzt und danach die Verdickung 84 in die Ausnehmung 70 eingeschnappt wird. Dadurch verspannt sich die Tragleiste 52 zwischen der Ausnehmung 70 und der Leiste 80, so daß eine feste Halterung erzielt ist. Wie aus der Fig. 2c ersichtlich ist, bildet die Ausformung 64 an der Tragplatte zusammen mit der Anformung 88 an der Tragleiste eine hutprofilartige Befestigungseinrichtung. Die Wölbung, die der Boden bzw. der mittlere Bereich 86 der Tragleiste 52 besitzt, dient zur Erhöhung der Elastizität bzw. der Eigenfederung. Auf diese Weise ist die Tragleiste 52 nach Einsetzen selbsthaltend. Diese Ausgestaltung ist insbesondere von Vorteil, wenn eine bereits bestückte Vorrichtung nachgerüstet werden muß.

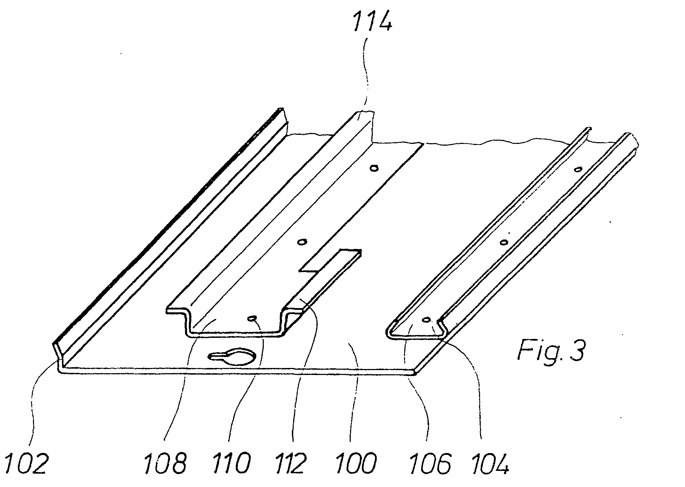

In der Fig. 3 ist eine weitere Ausgestaltung der Erfindung gezeigt ; die Tragplatte 100 ist aus Metallblech hergestellt und besitzt an ihrer einen Längskante eine Abkantung 102 und an der gegenüberliegenden Längskante eine Schiene 104, deren Enden C-förmig aufeinanderzu gebogen sind und somit eine trapezförmige Öffnung 106 bilden. Im mittleren Bereich der Tragplatte ist eine Hutprofilschiene 108 mittels Punktschweißen (bei 110) befestigt, bei der, wie man erkennen kann, ein Teil des einen Schenkels 112 entfernt ist. Man erkennt, daß der vordere Bereich zum Aufschnappen von elektrischen Installationsgeräten dient, während im hinteren Bereich, bei dem der Schenkel 112 entfernt ist, der andere Schenkel 114 hinter die bewegbare Nase gehakt wird, während der Leitungsschutzschalter bzw. das Schaltgerät mit seiner gegen überliegenden Anschlußklemme an einer nicht weiter dargestellen Sammelschiene befestigt wird, welche auf Sammelschienenstützern befestigt ist, die in die Ausnehmung 106 an der Schiene 104 eingesetzt und dort gehalten sind. In diesem Falle dient der Rand 102 als Führung für den Leitungsschutzschalter.

Es ist noch nachzutragen, daß die Fig. 2b eine Tragplatte 50 zeigt, bei der im Bereich zwischen der Ausformung 64 und der Leiste 80 eine Kerbe 98 angeformt ist, welche als Mittelmarkierung dient.

Während in den Figuren 1 bis 3 im wesentlichen die Tragplatte zusammen mit der Leiste bzw. der Hutprofilschiene gezeigt wurde, ist in den Figuren 4 und 5 dargestellt, wie die erfindungsgemäße Kombination von Tragplatte und Tragleiste nach den Figuren 1 und 2 verwendet bzw. eingesetzt werden kann.

In der Fig. 4 ist dargestellt wie ein Installationsgerät 120 mit einer am Boden angeordneten festen Nase 124 und einer beweglichen Nase 122 auf die Tragplatte 10 mit der Tragleiste 12 aufgeschnappt werden kann. Der freie Schenkel 16 der ersten Ausformung 14 hintergreift die bewegliche Nase 122, während die feststehende Nase 124 hinter die L-förmige Anformung 38 der Tragleiste 12 greift.

In der Fig. 5 ist dargestellt, wie ein Leitungsschutzschalter 126 an einer Sammelschiene 128 und an der ersten L-förmigen Ausformung 14 befestigt werden kann. Man erkennt die bewegliche Nase 130, die der Nase 122 des Installationsgerätes 120 entspricht, welche hinter den freien Schenkel 16 der L-förmigen Ausformung 14 greift. In die Ausnehmung 32 ist ein Sammelschienenstützer 132 eingeschnappt, der an seinem unteren Ende V-förmig angeordnete Arme 134 und 136 besitzt, welche in die trapezartige Ausnehmung 32 eingeschnappt werden. Am oberen Ende ist die Sammelschiene 128 befestigt, die unter die in der Zeichnung recht liegende Anschlußklemmschraube 138 greift und dort festgeschraubt ist. Die Halterung des Leitungsschutzschalters 126 erfolgt somit über die hinter den Schenkel 16 greifende Nase 130 und über die Sammelschiene 128 mit der Anschlußklemmschraube 138. Die Sammelschienenstützer 132 besitzen am oberen Ende einen Fortsatz 140, welcher hin zur Klemmschraube 138 gebogen ist und der Abstützung der Sammelschienenstützer 132 dient.

**Ansprüche**

1. Vorrichtung zur Befestigung von Einbau-Installationsgeräten (120), insbesondere zur gemeinsamen Befestigung von Leitungsschutzschaltern (120) und Sammelschienen (128), welche Installationsgeräte eine Schnellbefestigungseinrichtung (122, 124) mit einer am Boden des Installationsgerätes angeordneten festen und einer bewegbaren Nase (124 bzw. 122) zum Aufschnappen auf eine Tragschiene aufweisen, wobei die feste bzw. die bewegbare Nase im aufgeschnappten Zustand hinter freie Schenkel der Tragschiene greifen, mit einer Tragplatte (10), an der die Sammelschienen gehalten sind und die mit einer ersten L-förmigen Ausformung (14, 16, 18) versehen ist, wobei die Einbau-Installationsgeräte so auf der Tragplatte befestigt sind, daß der freie Schenkel (16) der ersten Ausformung hinter die bewegliche Nase (122) greift und auf der anderen Seite das Einbau-Installationsgerät an der Sammelschiene gehalten ist, dadurch gekennzeichnet, daß auf der Tragplatte (10, 50, 100) eine Tragleiste (12, 52) angebracht ist, die so ausgebildet ist, daß sie mit der ersten Ausformung zusammen eine Hutprofiltragschiene zum Aufschnappen von weiteren Installationsgeräten bildet.

2. Vorrichtung nach Anspruch 1, dadurch gekennzeichnet, daß die Tragplatte (10, 50) und die Tragleiste (12, 52) als Strangpressprofile ausgebildet sind.

3. Vorrichtung nach einem der Ansprüche 1 oder 2, dadurch gekennzeichnet, daß an der Tragplatte (10, 50) Ausnehmungen (20, 70) vorgesehen sind, die zur Aufnahme der Tragleiste (12, 52) dienen.

4. Vorrichtung nach Anspruch 3, dadurch gekennzeichnet, daß an der L-förmig ausgebildeten ersten Ausformung (14) dem freien Schenkel (16) gegenüberliegend ein Fortsatz (18) gebildet ist, der mit der Ausformung und der Tragplatte (10) selbst eine annähernd kreisförmige, offene Öffnung (20) bildet, daß an einer Seitenkante der Tragleiste (12) eine der Öffnung entsprechende Verdickung (34) gebildet ist, derart, daß die Tragleiste mit ihrer Verdickung in die Öffnung zur Bildung der Hutprofiltragschiene einschiebbar ist.

5. Vorrichtung nach Anspruch 4, dadurch gekennzeichnet, daß der Fortsatz (18) an der ersten Ausformung (14) in eine annähernd parallel zum Boden der Tragplatte (10) und in Abstand (d) zu dieser verlaufende Fortsatzleiste (22) übergeht, die zur Führung der Tragleiste (12) dient.

6. Vorrichtung nach einem der Ansprüche 1 oder 3, dadurch gekennzeichnet, daß auf dem freien Schenkel (66) der L-förmigen ersten Ausformung (64) gegenüberliegenden Seite eine Nut (70) angeformt ist, daß in einem der Abmessung einer Tragleiste (52) quer zu deren Längsrichtung entsprechenden Abstand eine weitere Leiste (80) an der Tragplatte (50) angeformt ist, und daß die Tragleiste (52) zwischen der ersten Ausformung, in deren Nut eingreifend, und der weiteren Leiste verspannt ist.

7. Vorrichtung nach Anspruch 6, dadurch gekennzeichnet, daß die der ersten Ausformung (64) hin zugewandte Fläche der weiteren Leiste (80) mit der Tragplatte (50) einen spitzen Winkel bildet, und daß an der Tragleiste (52) eine Kante (92) angeformt ist, deren Winkel dem Winkel zwischen der Innenfläche der weiteren Leiste (80) und der Tragplatte (50) entspricht, derart, daß die Tragleiste (52) mit ihrer einen Kante in die Nut (20) und der anderen Kante vor die weitere Leiste eingeschnappt ist.

8. Vorrichtung nach einem der vorigen Ansprüche, dadurch gekennzeichnet, daß die Tragleiste (12) in ihrer Mitte eine in Längsrichtung verlaufende, nutartige Längskerbe (42) besitzt.

9. Vorrichtung nach Anspruch 8, dadurch gekennzeichnet, daß unterhalb der Längskerbe (42) der Tragleiste (12) eine weitere nutartige Längskerbe (40) an der Tragplatte (10) angeformt ist.

10. Vorrichtung nach einem der vorigen Ansprüche, dadurch gekennzeichnet, daß parallel zu der ersten Ausformung bzw. nach Einschnappen bzw. Einsetzen der Tragleiste parallel zu dieser an den Endkanten der Tragplatte Ränder (24, 54, 28, 58) angeformt sind, die zur Führung der Leitungsschutzschalter bzw. der Sammelschienenstützer dienen.

11. Vorrichtung nach Anspruch 10, dadurch gekennzeichnet, daß im Bereich des Randes (28), der an der Kante der Tragplatte (10, 50) liegt, die dem freien Schenkel (16, 66) der ersten Ausformung (14, 64) entgegengesetzt liegt, eine Leiste (30, 60) angeformt ist, die hin zu diesem Rand (28, 58) geneigt ist und mit diesem zusammen eine trapezförmige Ausnehmung (32, 62) bildet, die zur Halterung und Befestigung der Sammelschienenstützer (32) dient.

12. Vorrichtung zur Befestigung von Einbau-Installationsgeräten, insbesondere zur gemeinsamen Befestigung von Leitungsschutzschaltern und Sammelschienen, welche Installationsgeräte (126) eine Schnellbefestigungseinrichtung (122, 124, 130) mit einer am Boden des Installationsgerätes angeordneten festen und einer bewegbaren Nase (122, 124, 130) zum Aufschnappen auf eine Tragschiene (108, 110, 112, 114) aufweisen, wobei die feste bzw. die bewegbare Nase (122, 124, 130) im aufgeschnappten Zustand hinter freie Schenkel (112, 114) der Tragschiene (108, 110, 112, 114) greifen, mit einer Tragplatte (100), an der die Sammelschienen gehaltert sind und die mit einer ersten L-förmigen Ausformung (114) versehen ist, wobei die Einbau-Installationsgeräte so auf der Tragplatte (100) befestigt sind, daß der freie Schenkel (114) der ersten Ausformung hinter die bewegliche Nase (130) greift und auf der anderen Seite das Einbau-Installationsgerät an der Sammelschiene (128) gehaltert ist, dadurch gekennzeichnet, daß auf der Tragplatte (100) als Tragschiene eine Hutprofiltragschiene (108) befestigt ist, deren einer, zu der Sammelschiene (128) hinweisender Schenkel (112) teilweise entfernt ist.

13. Vorrichtung nach Anspruch 12, dadurch gekennzeichnet, daß die Sammelschienen (128) auf Sammelschienenstützern (132) befestigt sind, welche in einer von einer C-Profilschiene (104) gebildeten trapezförmigen Öffnung (106) gehaltert sind.

**Claims**

1. An apparatus for attaching built-in installation equipment (120), in particular for the common attachment of automatic cutouts (120) and bus bars (128), which installation equipment comprises a rapid-attachment device (122, 124) with a fixed lug and a movable lug (124 and 122 respectively) disposed on the base of the installation equipment for snapping onto a support rail, the fixed and the movable lug respectively engaging behind free arms of the support rail in the snapped-on state ; comprising a support plate (10) on which the bus bars are held and which is provided with a first L-shaped projection (14, 16, 18), the built-in installation equipment being attached to the support plate in such a way that the free arm (16) of the first projection engages behind the movable lug (122) and on the other side the built-in installation equipment is held on the bus bar, characterized in that a support strip (12, 52), which is formed in such a way that together with the first projection it forms a support rail with a hat-shaped profile for snapping on additional installation equipment, is arranged on the support plate (10, 50, 100).

2. An apparatus according to Claim 1, characterized in that the support plate (10, 50) and the support strip (12, 52) are formed as extruded sections.

3. An apparatus according to one of Claims 1 and 2, characterized in that recesses (20, 70) for receiving the support strips (12, 52) are provided on the support plate (10, 50).

4. An apparatus according to Claim 3, characterized in that there is formed on the L-shaped first projection (14) opposite the free arm (16) an extension (18) which forms a substantially circular opening (20) with the projection and the support plate (10) themselves, and a thickening (34) corresponding to the opening is formed on one lateral edge of the support strip (12) in such a way that the thickening of the support strip may be inserted into the opening to form the support rail with a hat-shaped profile.

5. An apparatus according to Claim 4, characterized in that the extension (18) on the first projection (14) passes into an extension strip (22) which extends approximately parallel to the base of the support plate (10) and at a distance (d) therefrom and is used for guiding the support strip (12).

6. An apparatus according to one of Claims 1 or 3, characterized in that a groove (70) is formed on the side of the L-shaped first projection (64) opposite the free arm (66), an additional strip (80) is formed on the support plate (50) at a distance corresponding to the dimension of a support strip (52) transversely to its longitudinal direction, and the support strip (52) is gripped between the first projection, engaging in its groove, and the additional strip.

7. An apparatus according to Claim 6, characterized in that the face of the additional strip (80) facing the first projection (64) forms an acute angle with the support plate (50), and an edge (92) is formed on the support strip (52) whose angle corresponds to the angle between the inner face of the additional strip (80) and the support plate (50) in such a way that the support strip (52) may be snapped in with one of its edges in the groove (20) and the other edge in front of the additional strip.

8. An apparatus according to any one of the preceding Claims, characterized in that a groove-like longitudinal notch (42) extending in the longitudinal direction is provided in the centre of the support strip (12).

9. An apparatus according to Claim 8, characterized in that an additional groove-like longitudinal notch (40) is formed on the support plate (10) beneath the longitudinal notch (42) of the support strip (12).

10. An apparatus according to any one of the preceding Claims, characterized in that flanges (24, 54, 28, 58), which are used for guiding the automatic cutouts and the bus supports respectively, are formed on the terminal edges of the support plate parallel to the first projection or — after snapping in or inserting the support strip — parallel to the latter.

11. An apparatus according to Claim 10, characterized in that in the region of the flange (28) which is adjacent to the edge of the support plate (10, 50) which is opposite the free arm (16, 66) of the first projection (14, 64) a strip (30, 60) is formed which is inclined relative to the said flange (28, 58) and together therewith forms a trapezoidal recess (32, 62) which is used for holding and attaching the bus supports (32).

12. An apparatus for attaching built-in installation equipment, in particular for the common attachment of automatic cutouts and bus bars, which installation equipment (126) comprises a rapid-attachment device (122, 124, 130) with a fixed lug and a movable lug (122, 124, 130) disposed on the base of the installation equipment for snapping onto a support rail (108, 110, 112, 114), the fixed and the movable lug respectively (122, 124, 130) engaging behind free arms (112, 114) of the support rail (108, 110, 112, 114) in the snapped-on state, with a support plate (100) on which the bus bars are held and which is provided with a first L-shaped projection (114), the built-in installation equipment being attached to the support plate (100) in such a way that the free arm (114) of the first projection engages behind the movable lug (130) and on the other side the built-in installation equipment is held on the bus bar (128), characterized in that a support rail (108) with a hat-shaped profile, one arm (112) of which facing the bus bar (128) is partially removed, is attached to the support plate (100) as a support rail.

13. An apparatus according to Claim 12, characterized in that the bus bars (128) are attached to bus supports (132) which are held in a trapezoid opening (106) formed by a rail (104) with a C-shaped profile.

## Revendications

1. Dispositif pour fixer des éléments d'installation de montage (120), en particulier pour la fixation commune de commutateurs (120) de protection de lignes et de rails collecteurs (128), lesdits éléments d'installation comportant un dispositif de fixation rapide (122, 124), un talon fixe et un talon mobile (124 ou 122) disposés sur le fond de l'élément d'installation pour réaliser un encliquetage sur un rail porteur, le talon fixe ou le talon mobile dans la position d'encliquetage contactant par derrière des branches libres du rail porteur, ainsi qu'une plaque porteuse (10) où sont maintenus les rails collecteurs et qui est munie d'une première déformation (14, 16, 18) en forme de L, les éléments d'installation de montage étant fixés de telle manière sur la plaque porteuse que la branche libre (16) de la première déformation est en contact avec l'arrière du talon mobile (122) et que de l'autre côté, l'élément d'installation de montage est maintenu sur le rail collecteur, caractérisé en ce qu'on dispose sur la plaque porteuse (10, 50, 100) une barrette porteuse (12, 52) qui est conformée de telle manière qu'elle forme, en compagnie de la première déformation, un rail porteur à profil en chapeau pour l'encliquetage d'autres éléments d'installation.

2. Dispositif selon la revendication 1, caractérisé en ce que la plaque porteuse (10, 50) et la barrette porteuse (12, 52) sont en forme de profilés de presse à filer.

3. Dispositif selon l'une des revendications 1 ou 2, caractérisé en ce que la plaque porteuse (10, 50) comporte des évidements (20, 70) pour recevoir la barrette porteuse (12, 52).

4. Dispositif selon la revendication 3, caractérisé en ce que sur la première déformation (14) en forme de L est formé en face de la branche libre (16) un appendice (18) qui constitue avec la déformation et la plaque porteuse (10) elle-même un orifice ouvert (20) à peu près circulaire et en ce que, sur une arête latérale de la barrette porteuse (12), est formée une épaisseur (34) correspondant à l'orifice de telle manière que la barrette porteuse avec son épaisseur puisse être introduite dans l'orifice de manière à constituer le rail porteur à profil en chapeau.

5. Dispositif selon la revendication 4, caractérisé en ce que l'appendice (18) de la première déformation (14) se transforme en une barrette de prolongation (22) à peu près parallèle au fond de la plaque porteuse (10) et s'étendant à une distance (d) de celle-ci en servant de guide à la barrette porteuse (12).

6. Dispositif selon l'une des revendications 1 ou 3, caractérisé en ce que sur le côté faisant face à la branche libre (66) de la première déformation (64) en forme de L, on forme une rainure (70), en ce que, à une distance correspondant à la dimension d'une barrette porteuse (52), transversalement à la direction longitudinale de celle-ci, on forme une autre barrette (80) sur la plaque porteuse (50), et en ce que la plaque porteuse (52) se trouve coincée entre la première déformation dans la rainure de laquelle elle s'engage, et l'autre barrette.

7. Dispositif selon la revendication 6, caractérisé en ce que la face de l'autre barrette (80) tournée vers la première déformation (64) forme avec la plaque porteuse (50) un angle aigu et en ce que, sur la barrette porteuse (52), on forme une arête (92) dont l'angle correspond à l'angle se trouvant entre la face interne de l'autre barrette (80) et la plaque porteuse (50), de telle manière que la barrette porteuse (52) avec l'une de ses arêtes s'enclenche dans la rainure (20) et avec l'autre arête devant l'autre barrette.

8. Dispositif selon l'une des revendications précédentes, caractérisé en ce que la barrette porteuse (12) présente en son milieu une entaille longitudinale (42) en forme de rainure qui s'étend dans la direction longitudinale.

9. Dispositif selon la revendication 8, caractérisé en ce que, en dessous de l'entaille longitudinale (42) de la barrette porteuse (12), on forme une autre entaille longitudinale en forme de rainure (40) sur la plaque porteuse (10).

10. Dispositif selon l'une des revendications précédentes, caractérisé en ce que, en parallèle à la première déformation, ou bien après enclenchement ou bien introduction de la barrette porteuse, en parallèle à celle-ci, on forme sur les arêtes terminales de la plaque porteuse des bords (24, 54, 28, 58) qui servent à guider les commutateurs de protection de lignes ou les supports de rails collecteurs.

11. Dispositif selon la revendication 10, caractérisé en ce que, au voisinage du bord (28) qui se trouve sur l'arête de la plaque porteuse (10, 50) qui est à l'opposé de la branche libre (16, 66) de la première déformation (14, 64), on forme une barrette (30, 60) qui est inclinée vers ce bord (28, 58) et forme avec celui-ci un évidement trapézoïdal (32, 62) qui sert à maintenir et à fixer les supports de rails collecteurs (32).

12. Dispositif pour la fixation d'éléments d'installation de montage, en particulier pour la fixation commune de commutateurs de protection de lignes et de rails collecteurs, lesdits éléments d'installation (126) comprenant un dispositif de fixation rapide (122, 124, 130) ayant un talon fixe et un talon mobile (122, 124, 130) disposés sur le fond de l'élément d'installation pour effectuer un enclenchement sur un rail porteur (108, 110, 112, 114), le talon fixe ou le talon mobile (122, 124, 130) contactant dans la position d'enclenchement et par l'arrière des branches libres (112, 114) du rail porteur (108, 110, 112, 114), ainsi qu'une plaque porteuse (100) sur laquelle les rails collecteurs sont montés et qui est munie d'une première déformation (114) en forme de L, les éléments d'installation de montage étant fixés de telle manière sur la plaque porteuse (100) que la branche libre (114) de la première déformation contacte par l'arrière le talon mobile (130) et que, de l'autre côté, l'élément d'installation de montage est maintenu sur le rail collecteur (128), caractérisé en ce que sur la plaque porteuse (100) est fixé en tant que rail porteur, un rail porteur à profil en chapeau (108) dont l'une des branches (112) regardant vers le rail collecteur (128) est partiellement éloignée.

13. Dispositif selon la revendication 12, caractérisé en ce que les rails collecteurs (128) sont fixés sur des supports de rails collecteurs (132) qui sont maintenus dans un orifice (106) trapézoïdal formé par un rail (104) à profil en C.

0 010 251

Fig. 1a

Fig. 1b

Fig. 1c

1

52

*Fig. 2a*

96
88

84  86 94  92

66  98  50

54

*Fig. 2b*

56  64  70  80  60  62 58

50

*Fig.2c*

70 84 90

*Fig. 3*

114

102    108  110  112  100  106  104

*Fig. 4*

122   16   12   124   10

126
138
128
140  132
134
28

130   14   16   10   136   30   32

*Fig. 5*